# FASCICULE DE BREVET EUROPEEN

(11) **EP 2 466 595 B1**
(45) Date de publication et mention de la délivrance du brevet: **20.08.2014**
(21) Numéro de dépôt: 11190513.9
(22) Date de dépôt: 24.11.2011
(51) Int. Cl.: H01B 3/44

(54) **Gaine extérieure de protection pour câble à base d'un élastomère de polyoléfine chlorée**
Äusserer Schutzmantel für Kabel auf Basis von chloriertem Polyolefin-Elastomer
Protective outer sheath for cable based on chlorinated polyolefin elastomer

(30) Priorité: 15.12.2010 FR 1060555
(43) Date de publication de la demande: 20.06.2012
(73) Titulaire: Nexans, 75008 Paris (FR)
(72) Inventeur: Dalbe, Bernard, 69005 LYON (FR)
(74) Mandataire: Peguet, Wilfried

(56) Documents cités:
- US-A- 3 845 166
- US-A- 4 350 796
- US-A- 5 036 121
- MANOJ N R ET AL: "THERMALLY INDUCES CROSSLINKING IN BLENDS OF POLY(VINYL CHLORIDE) AND HYDROGENATED ACRYLONITRILE-BUTADIENE RUBBER", RUBBER CHEMISTRY AND TECHNOLOGY, AMERICAN CHEMICAL SOCIETY, RUBBER DIVISION, US, vol. 66, no. 4, 1 septembre 1993 (1993-09-01), pages 550-558, XP000411293, ISSN: 0035-9475
- Sudhin Datta: "Special-Purpose Elastomers" In: "Rubber Compounding", 23 July 2004 (2004-07-23), CRC Press, XP055051424, ISBN: 978-1-42-003046-4 pages 1-28, DOI: 10.1201/9781420030464.ch3,

## Description

La présente invention concerne un câble d'énergie et/ou de télécommunication dont la gaine extérieure de protection est obtenue à partir d'une composition réticulable comprenant un élastomère de polyoléfine chlorée.

Elle s'applique typiquement, mais non exclusivement, au domaine des câbles sujets à des dommages mécaniques importants, comme par exemple des câbles se trouvant dans les mines.

Un câble d'énergie et/ou de télécommunication est un câble électrique et/ou optique, destiné au transport d'énergie et/ou à la transmission de données. Il comprend classiquement un ou plusieurs éléments conducteurs isolés, ou en d'autres termes un ou plusieurs conducteur(s) électrique(s) et/ou optique(s) allongé(s) entouré(s) par au moins une couche isolante. La couche isolante peut être typiquement une couche polymérique électriquement isolante en contact physique avec le ou les conducteur(s) électrique(s) et/ou optique(s). Ledit ou lesdits éléments conducteurs isolés sont entourés par une gaine extérieure de protection destinée à protéger mécaniquement le ou les éléments conducteurs isolés.

Les câbles se trouvant dans les mines subissent des dommages mécaniques importants. Ces câbles peuvent en effet être trainés à même le sol ou écrasés par de lourdes charges, engendrant ainsi des poinçonnements de la gaine extérieure de protection, ou voire même sa déchirure.

De ce fait, la gaine extérieure de ces câbles, typiquement obtenue à partir d'une composition réticulable comprenant un élastomère de polyéthylène chloré (CPE pour « *chlorinated polyethylene* »), est renforcée par l'ajout de charges de renforcement comme de la silice ou du kaolin, pour améliorer sa résistance mécanique à l'abrasion.

Toutefois, un ajout trop important de ces charges de renforcement dans la composition réticulable à base d'élastomère de CPE génère une augmentation significative de la viscosité de la composition, ce qui induit des problèmes de mise en oeuvre de la composition, notamment lors de son extrusion.

Le document US 5036121 divulgue une composition pour la gaine d'un câble qui comprend du chlorure de polyvinylidène, un élastomère de polyoléfine chlorée et un élastomère de nitrile non-hydrogéné.

Le but de la présente invention est de pallier les inconvénients des techniques de l'art antérieur en proposant notamment une couche polymère de protection pour câble d'énergie et/ou de télécommunication obtenue à partir d'une composition réticulable facile à mettre en oeuvre, notamment avec une rhéologie adaptée aux procédés d'extrusion, et présentant des propriétés mécaniques améliorées, notamment une résistance à l'abrasion améliorée de façon significative.

La présente invention a pour objet un câble d'énergie et/ou de télécommunication comprenant au moins un élément conducteur entouré par une couche polymère de protection réticulée du type élastomère chloré, ladite couche polymère de protection étant obtenue à partir d'une composition réticulable comprenant un élastomère de polyoléfine chlorée, caractérisé en ce que ladite composition réticulable comprend en outre un élastomère de nitrile hydrogéné.

Plus particulièrement, la couche polymère de protection réticulée du type élastomère chloré peut être une gaine extérieure de protection. Notamment, ledit câble d'énergie et/ou de télécommunication comprend un ou plusieurs éléments conducteurs isolés, le ou les éléments conducteurs isolés étant entourés par ladite gaine extérieure de protection.

De préférence, l'élastomère de polyoléfine chlorée utilisé dans la présente invention est un élastomère de polyéthylène chloré (CPE).

Grâce à l'invention, la composition réticulable présente une viscosité optimale pour être mise en oeuvre, notamment par extrusion afin d'obtenir une couche polymère extrudée. Plus particulièrement, la viscosité Mooney ML (1+4) à 100°C de la composition réticulable de l'invention est de préférence d'au plus 100 M.U (*Mooney Unit*). Elle est typiquement mesurée selon la norme ISO289-1, à une température de 100°C.

En outre, les propriétés mécaniques, notamment de résistance à l'abrasion, sont meilleures que celles obtenues avec les gaines extérieures de l'art antérieur en prenant en considération une viscosité identique entre la composition réticulable selon l'invention et la composition réticulable selon l'art antérieur (i.e. composition comprenant des agents de renforcement, mais ne comprenant pas d'élastomère de nitrile hydrogéné).

L'élastomère de nitrile hydrogéné, pouvant être partiellement ou totalement hydrogéné, peut être de préférence un élastomère de butadiène et de nitrile hydrogéné (HNBR pour « *hydrogenated butadiene nitrile rubber* »), et de façon particulièrement préférée, un élastomère de butadiène et d'acrylonitrile hydrogéné.

Dans un mode de réalisation particulier, la composition réticulable comprend au moins 50 parties en poids d'élastomère de polyoléfine chloré pour 100 parties en poids de polymères dans la composition. De préférence, la composition réticulable comprend au moins 60 parties en poids d'élastomère de polyoléfine chloré pour 100 parties en poids de polymères dans la composition, et encore plus préférentiellement au moins 80 parties en poids d'élastomère de polyoléfine chloré pour 100 parties en poids de polymères dans la composition.

La quantité d'élastomère de nitrile hydrogéné peut être variable selon la résistance à l'abrasion souhaitée. Ceci étant, le Demandeur a découvert de façon surprenante qu'une quantité non nécessairement importante d'élastomère de nitrile hydrogéné dans la composition réticulable selon l'invention permet d'obtenir une gaine extérieure de protection avec de très bonnes propriétés mécaniques, tout en garantissant une viscosité optimale permettant la mise en oeuvre facile de ladite composition réticulable. De ce fait, la composition réticulable en devient d'autant plus économique que l'élastomère de nitrile hydrogéné est ajouté en quantité limitée.

Par conséquent, il est avantageux que la composition réticulable comprenne au plus 20 parties en poids d'élastomère de nitrile hydrogéné pour 100 parties en poids de polymères dans la composition, de préférence au plus 15 parties en poids d'élastomère de nitrile hydrogéné pour 100 parties en poids de polymères dans la composition, et de façon particulièrement préférée au plus 10 parties en poids d'élastomère de nitrile hydrogéné pour 100 parties en poids de polymères dans la composition.

Dans un mode de réalisation particulièrement préféré, la composition réticulable de l'invention comprend :
- de 80 à 99 parties en poids d'élastomère de polyoléfine chloré, et
- de 1 à 20 parties en poids d'élastomère de nitrile hydrogéné,
pour 100 parties en poids de polymères dans la composition.

Plus particulièrement, la composition de l'invention comprend uniquement, en tant que polymères, un ou plusieurs élastomères de polyoléfine chlorée, et un ou plusieurs élastomères de nitrile hydrogéné.

Pour obtenir la gaine extérieure de protection selon l'invention, la composition réticulable destinée à former cette gaine extérieure peut être réticulée par des techniques classiques de réticulation bien connues de l'homme du métier. A ce titre, on peut citer par exemple la réticulation peroxyde sous l'action de la chaleur ; la réticulation silane en présence d'un agent de réticulation ; la réticulation par faisceaux d'électron, rayons gamma, rayons X, ou microondes ; la réticulation par voie photochimique telle que l'irradiation sous rayonnement béta, ou l'irradiation sous rayonnement ultraviolet en présence d'un photo-amorceur.

La réticulation peroxyde sous l'action de la chaleur est préférée dans le cadre de l'invention. Dans ce cas particulier, la composition comprend en outre un agent de réticulation tel qu'un peroxyde organique. Ce type de réticulation est facile à mettre en oeuvre et est très économique.

La réticulation par le soufre, ou en d'autres termes en utilisant le soufre comme agent de réticulation n'est pas envisagée dans le cadre de l'invention car elle n'est pas adaptée aux élastomères de polyoléfine chlorée. Ce type de réticulation étant bien connu de l'homme du métier.

Un autre objet de l'invention concerne un procédé de fabrication d'un câble tel que défini dans la présente invention, caractérisé en ce qu'il comprend les étapes consistant à :
i. mettre en oeuvre la composition réticulable, de préférence par extrusion, pour former la gaine extérieure de protection dudit câble, la composition ayant notamment une viscosité Mooney ML (1+4) d'au plus 100 M.U. mesurée à 100°C selon la norme ISO289-1, et
ii. réticuler la gaine extérieure de protection formée à l'étape i.

Lorsque la composition réticulable comprend un agent de réticulation du type peroxyde organique, il est bien connu que la température de mise en oeuvre de la composition doit être suffisamment basse pour éviter la réticulation (i.e. la vulcanisation) durant tout le temps de la mise en oeuvre. Dans ce cas, l'étape ii est, quand à elle, réalisée à une température supérieure permettant une décomposition rapide dudit peroxyde organique afin de réticuler la gaine extérieure de protection formée à l'étape i, par voie peroxyde.

D'autres caractéristiques et avantages de la présente invention apparaîtront à la lumière des exemples qui vont suivre en référence, lesdits exemples étant donnés à titre illustratif et nullement limitatif.

Le tableau 1 qui suit détaille deux exemples de compositions réticulables : l'une selon l'invention (Composition A), et l'autre selon l'art antérieur (Composition B).

**Tableau 1**

| **Composition réticulable** | **A** | **B** |
|---|---|---|
| **CPE** | 90 | 100 |
| **HNBR** | 10 | 0 |
| **Charges de renforcement** | 61 | 61 |
| **Plastifiants** | 15 | 15 |
| **Agents de mise en oeuvre et antioxydants** | 3,5 | 3,5 |
| **Stabilisant du type capteur d'acidité** | 5 | 5 |
| **Activateur de réticulation** | 3 | 3 |
| **Agent de réticulation** | 9 | 9 |

La teneur des constituants dans les compositions réticulables du tableau 1 est exprimée en parties en poids pour 100 parties en poids de polymères dans la composition. Notamment, les polymères dans le tableau 1 concernent soit le mélange de CPE et de HNBR (Composition A), soit le CPE en tant que tel (Composition B).

L'origine des constituants du tableau 1 est la suivante :
- CPE est un élastomère de polyéthylène chloré commercialisé par la société Betaquimica sous la référence CPE1462, cet élastomère comprenant 35% en poids de chlore, et
- HNBR est un élastomère d'acrylonitrile et de butadiène hydrogéné commercialisé par la société Lanxess sous la référence Therban KA 8889, cet élastomère comprenant 33 % en poids de fonction acrylonitrile.

Dans le tableau 1, les charges de renforcement, les plastifiants, l'agent de mise en oeuvre, les antioxydants, le stabilisant, l'activateur de réticulation, l'agent de réticulation du type peroxyde organique, sont des composés bien connus de l'homme du métier.

### Résultats

### Mise en oeuvre des compositions A et B

Les constituants de chacune des compositions A et B ont été mis en oeuvre comme suit :
i. les différents constituants du tableau 1, exceptés l'agent de réticulation et les activateurs de réticulation, sont mélangés à l'aide d'un mélangeur interne à une température d'environ 120°C,
ii. l'agent de réticulation et les activateurs de réticulation sont ensuite ajoutés sur mélangeur bi-cylindres à environ 70°C au mélange de l'étape i,
iii. le mélange de l'étape ii est mise en oeuvre et réticulé par compression moulage à 180°C, sous 150 bars de pression, pour obtenir des plaques réticulées de 1,5 mm d'épaisseur (plaques réticulées A et B obtenues respectivement à partir des compositions réticulables A et B).

### Propriétés mesurées

### - Mesure de la viscosité Mooney

La viscosité Mooney de la composition réticulable (i.e. composition non réticulée) est mesurée selon la norme ISO289-1, à l'aide d'un appareil MV2000 de la société Alpha Technologies. Le Mooney MV2000 est constitué d'une chambre thermo-régulée, au sein de laquelle est placé ladite composition réticulable, et d'un rotor plan tournant à vitesse constante au sein du compound (2 tours/min). La viscosité ou consistance Mooney est proportionnelle à la valeur du couple exercé par la matière sur le rotor. Elle est donnée en points Mooney ou Mooney Units (avec 1 M.U. = 8,3.10⁻² N.m). La valeur de viscosité indiquée ML (1+4) est mesurée à 100°C.

### - Mesure de la résistance à la traction et de l'allongement à la rupture à température ambiante

La résistance à la traction et l'allongement à la rupture sont mesurés selon la norme ASTM D412 sur des éprouvettes haltères de type H2 obtenues à partir des plaques réticulées. Les éprouvettes sont testées à l'aide d'une machine de traction à la vitesse de 250mm/min, à une température de 23°C ± 2°C.

Les éprouvettes en forme d'haltère de type H2 sont découpées à l'aide d'un emporte-pièce dans les plaques d'environ 1,5 mm d'épaisseur préparées par compression-moulage. Chaque plaque doit permettre le prélèvement d'au moins 5 éprouvettes pour chaque essai de traction (essai de traction initial et essai de traction après vieillissement).

### - Mesure de la résistance à la traction et de l'allongement à la rupture après vieillissement pendant 168 heures à 100°C

La résistance à la traction et l'allongement à la rupture sont mesurés selon la norme ASTM D412 sur des éprouvettes haltères de type H2 obtenues à partir des plaques réticulées telles que décrites ci-avant.

Ces éprouvettes H2 sont vieillis dans une étuve sous air à 100°C pendant 168 heures, et sont ensuite testées à l'aide d'une machine de traction à la vitesse de 250mm/min, à une température de 23°C ± 2°C.

Le résultat est comparé à celui mesuré avant vieillissement (cf. mesure à température ambiante) afin de déterminer un ratio en pourcentage (i.e. % de la valeur initiale) entre la valeur vieillie et la valeur initiale ((valeur vieillie / valeur initiale)x100).

Ce ratio doit être supérieur à 70% pour la résistance à la traction et supérieure à 55 % pour l'allongement à la rupture, selon les exigences de la norme ICEA S-75-381.

### - Mesure de la résistance à l'abrasion

Le test d'abrasion est réalisé selon la norme ASTM D3389 et permet de déterminer la résistance à l'abrasion des plaques réticulées.

Tout d'abord, la masse initiale de l'échantillon (i.e. plaque réticulée) à tester est déterminée. Puis, l'échantillon est placé sur l'abrasimètre. Un poids de 1000 grammes est placé au sommet du cylindre (ou roue) d'abrasion. Ensuite le cylindre (référence de la roue : H18) est mis en mouvement sur l'échantillon pendant 1000 tours. Enfin, la masse finale de l'échantillon est mesurée. La résistance à l'abrasion est exprimée par la perte de masse entre la masse initiale et la masse finale (perte de masse = masse initiale - masse finale). Le résultat est exprimé en mg.

Plus la valeur de la résistance à l'abrasion de la plaque réticulée est basse, meilleure sera sa résistance à l'abrasion.

Les propriétés mesurées sur les plaques A et B sont rassemblées dans le tableau 2 ci-dessous. Le tableau 2 comprend en outre une colonne présentant les exigences requises pour les gaines extérieures de protection pour les câbles utilisées dans les mines, selon la norme ICEA S-75-381.

**Tableau 2**

| **Plaques réticulées** | **A** | **B** | **Exigences selon la norme ICEA S-75-381** |
|---|---|---|---|
| **Viscosité Mooney ML (1+4) 100°C en MU** | 91 | 91 | - |
| **Résistance à la traction (Mpa) à 23°C** | 21,9 | 19,1 | **> 16,5** |
| **Allongement à la rupture (%) à 23°C** | 496 | 496 | **> 300** |
| **Résistance à la traction après vieillissement à 100°C pendant 168h (% de la valeur initiale)** | 100 | 118 | **> 70** |
| **Allongement à la rupture après vieillissement à 100°C pendant 168h (% de la valeur initiale)** | 79 | 82 | **> 55** |
| **Résistance à l'abrasion (mg)** | 135 | 173 | / |

Par conséquent, il apparaît clairement au vu des résultats rassemblés dans le tableau 2, que, à viscosité égale, la résistance à l'abrasion de la plaque réticulée A selon l'invention (cf. Composition A) est bien meilleure (environ 25% meilleure) que celle obtenue avec la plaque réticulée B de l'art antérieur (cf. Composition B). Par ailleurs, les autres propriétés mécaniques mesurées restent sensiblement équivalentes, voire meilleures, pour la plaque réticulée A par rapport à celles mesurées pour la plaque réticulée B.

## Revendications

1. Câble d'énergie et/ou de télécommunication comprenant un élément conducteur entouré par une couche polymère de protection réticulée du type élastomère chloré, ladite couche polymère de protection étant obtenue à partir d'une composition réticulable comprenant un élastomère de polyoléfine chlorée, **caractérisé en ce que** ladite composition réticulable comprend en outre un élastomère de nitrile hydrogéné.

2. Câble selon la revendication 1, **caractérisé en ce que** l'élastomère de polyoléfine chlorée est un élastomère de polyéthylène chloré.

3. Câble selon la revendication 1 ou 2, **caractérisé en ce que** l'élastomère de nitrile hydrogéné est un élastomère de butadiène et d'acrylonitrile hydrogéné.

4. Câble selon l'une quelconque des revendications précédentes, **caractérisé en ce que** la composition réticulable comprend au moins 50 parties en poids d'élastomère de polyoléfine chloré pour 100 parties en poids de polymères dans la composition.

5. Câble selon l'une quelconque des revendications précédentes, **caractérisé en ce que** la composition réticulable comprend au moins 80 parties en poids d'élastomère de polyoléfine chloré pour 100 parties en poids de polymères dans la composition.

6. Câble selon l'une quelconque des revendications précédentes, **caractérisé en ce que** la composition réticulable comprend au plus 20 parties en poids d'élastomère de nitrile hydrogéné pour 100 parties en poids de polymères dans la composition.

7. Câble selon l'une quelconque des revendications précédentes, **caractérisé en ce que** la composition réticulable comprend :
- de 80 à 99 parties en poids d'élastomère de polyoléfine chloré, et
- de 1 à 20 parties en poids d'élastomère de nitrile hydrogéné,
pour 100 parties en poids de polymères dans la composition.

8. Câble selon l'une quelconque des revendications précédentes, **caractérisé en ce que** la composition réticulable comprend en outre un agent de réticulation du type peroxyde organique.

9. Câble selon l'une quelconque des revendications précédentes, **caractérisé en ce que** la couche polymère de protection est une gaine extérieure de protection.

10. Câble selon la revendication 9, **caractérisé en ce que** le câble comprend un ou plusieurs éléments conducteurs isolés, le ou les éléments conducteurs isolés étant entourés par ladite gaine extérieure de protection.

11. Procédé de fabrication d'un câble selon l'une quelconque des revendications 1 à 10, **caractérisé en ce qu'**il comprend les étapes consistant à :
i. mettre en l'oeuvre la composition réticulable pour former la gaine extérieure de protection dudit câble, et
ii. réticuler la gaine extérieure de protection formée à l'étape i.

## Patentansprüche

1. Energie- und/oder Telekommunikationskabel, das ein von einer vernetzten Polymerschutzschicht vom Typ chloriertes Elastomer umgebenes leitendes Element umfasst, wobei die Polymerschutzschicht aus einer vernetzbaren Zusammensetzung hergestellt ist, die ein chloriertes Polyolefin-Elastomer umfasst, **dadurch gekennzeichnet, dass** die vernetzbare Zusammensetzung ferner ein hydrogeniertes Nitril-Elastomer umfasst.

2. Kabel nach Anspruch 1, **dadurch gekennzeichnet, dass** das chlorierte Polyolefin-Elastomer ein chloriertes Polyethylen-Elastomer ist.

3. Kabel nach Anspruch 1 oder 2, **dadurch gekennzeichnet, dass** das hydrogenierte Nitrilelastomer ein hydrogeniertes Butadien- und Acrylnitrilelastomer ist.

4. Kabel nach einem der vorangehenden Ansprüche, **dadurch gekennzeichnet, dass** die vernetzbare Zusammensetzung mindestens 50 Gewichtsteile chloriertes Polyolefin-Elastomer auf 100 Gewichtsteile Polymere in der Zusammensetzung umfasst.

5. Kabel nach einem der vorangehenden Ansprüche, **dadurch gekennzeichnet, dass** die vernetzbare Zusammensetzung mindestens 80 Gewichtsteile chloriertes Polyolefin-Elastomer auf 100 Gewichtsteile Polymere in der Zusammensetzung umfasst.

6. Kabel nach einem der vorangehenden Ansprüche, **dadurch gekennzeichnet, dass** die vernetzbare Zusammensetzung höchsten 20 Gewichtsteile hydrogeniertes Nitrilelastomer auf 100 Gewichtsteile Polymere in der Zusammensetzung umfasst.

7. Kabel nach einem der vorangehenden Ansprüche, **dadurch gekennzeichnet, dass** die vernetzbare Zusammensetzung umfasst:
- 80 bis 99 Gewichtsteile chloriertes Polyolefin-Elastomer und
- 1 bis 20 Gewichtsteile hydrogeniertes Nitrilelastomer auf 100 Gewichtsteile Polymere in der Zusammensetzung.

8. Kabel nach einem der vorangehenden Ansprüche, **dadurch gekennzeichnet, dass** die vernetzbare Zusammensetzung ferner ein Vernetzungsmittel vom Typ organisches Peroxyd umfasst.

9. Kabel nach einem der vorangehenden Ansprüche, **dadurch gekennzeichnet, dass** die Polymerschutzschicht eine äußere Schutzhülle ist.

10. Kabel nach Anspruch 9, **dadurch gekennzeichnet, dass** das Kabel ein oder mehrere isolierte leitende Elemente umfasst, wobei das oder die isolierten leitenden Elemente von der äußeren Schutzschicht umgeben sind.

11. Herstellungsverfahren eines Kabels nach einem der Ansprüche 1 bis 10, **dadurch gekennzeichnet, dass** es die folgenden Schritte umfasst:
i. Verarbeiten der vernetzbaren Zusammensetzung, um die äußere Schutzschicht des Kabels zu bilden, und
ii. Vernetzen der in Schritt i gebildeten äußeren Schutzschicht.

## Claims

1. A power and/or telecommunications cable comprising a conducting element surrounded by a cross-linked protective polymeric layer of the chlorinated elastomer type, said protective polymeric layer being obtained from a cross-linkable composition comprising a chlorinated polyolefin elastomer, **characterized in that** said cross-linkable composition further comprises a hydrogenated nitrile elastomer.

2. The cable according to claim 1, **characterized in that** the chlorinated polyolefin elastomer is a chlorinated polyethylene elastomer.

3. The cable according to claim 1 or 2, **characterized in that** the hydrogenated nitrile elastomer is a hydrogenated butadiene and acrylonitrile elastomer.

4. The cable according to any of the preceding claims, **characterized in that** the cross-linkable composition comprises at least 50 parts by weight of chlorinated polyethylene olefin elastomer for 100 parts by weight of polymers in the composition.

5. The cable according to any of the preceding claims, **characterized in that** the cross-linkable composition comprises at least 80 parts by weight of chlorinated polyethylene olefin elastomer for 100 parts by weight of polymers in the composition.

6. The cable according to any of the preceding claims, **characterized in that** the cross-linkable composition comprises at most 20 parts by weight of hydrogenated nitrile elastomer for 100 parts by weight of polymers in the composition.

7. The cable according to any of the preceding claims, **characterized in that** the cross-linkable composition comprises:
- from 80 to 99 parts by weight of chlorinated polyolefin elastomer, and
- from 1 to 20 parts by weight of hydrogenated nitrile elastomer,
for 100 parts by weight of polymers in the composition.

8. The cable according to any of the preceding claims, **characterized in that** the cross-linkable composition further comprises a cross-linking agent of the organic peroxide type.

9. The cable according to any of the preceding claims, **characterized in that** the protective polymeric layer is an outer protective sheath.

10. The cable according to claim 9, **characterized in that** the cable comprises one or several insulated conducting elements, the insulated conducting element(s) being surrounded by said outer protective sheath.

11. A method for manufacturing a cable according to any of claims 1 to 10, **characterized in that** it comprises the steps of:
i. applying the cross-linkable composition for forming the outer protective sheath of said cable, and
ii. cross-linking the outer protective sheath formed in step i.
